# EUROPÄISCHE PATENTANMELDUNG

(11) **EP 3 242 179 A1**
(43) Veröffentlichungstag der Anmeldung: **08.11.2017**
(21) Anmeldenummer: 16167901.4
(22) Anmeldetag: 02.05.2016
(51) Int. Cl.: G05B 19/42, G05B 19/401

(54) **VERFAHREN ZUR BEARBEITUNG EINES WERKSTÜCKS**

(71) Anmelder: Siemens Aktiengesellschaft, 80333 München (DE)
(72) Erfinder: Pitz, Thomas, 71263 Weil der Stadt (DE); Spielmann, Ralf, 70569 Stuttgart (DE)

(57) **Zusammenfassung**

Verfahren zur Bearbeitung eines Werkstücks (4) in einer numerisch gesteuerten Werkzeugmaschine (2), die zumindest ein Werkzeug (3) aufweist, wobei die Werkzeugmaschine (2) mit einer numerischen Steuerung (1) verbunden ist und wobei die Bearbeitung von einem in der Steuerung (1) ablaufenden NC-Programm gesteuert wird, welches die Bearbeitung des Werkstücks (4) in der Werkzeugmaschine (2) durch die Ausführung einer Vielzahl von Bearbeitungsschritten (S1-S7) beschreibt, mit den Schritten:
- zumindest eine Fehlstelle (5) an der Oberfläche des Werkstücks (4) wird lokalisiert,
- in die Steuerung (1) werden Daten über die Fehlstelle (5) eingespeist,
- die Steuerung (1) identifiziert einen entsprechenden Teil des NC-Programms für die Bearbeitung des Werkstücks (4), in dem die Bearbeitung der Fehlstelle (5) programmiert ist,
- die Steuerung (1) berechnet eine Fahrbahn der Werkzeugmaschine (2) zur Fehlstelle (5),
- das Werkzeug (3) wird über diese Fahrbahn zur Fehlstelle (5) verfahren und
- die Fehlstelle (5) wird gemäß dem entsprechenden Teil des NC-Programms nachbearbeitet, wobei wenigstens ein Bearbeitungsschritt (S1-S7) geändert wird.

## Beschreibung

Die Erfindung betrifft ein Verfahren zur Bearbeitung eines Werkstücks in einer numerisch gesteuerten Werkzeugmaschine, die zumindest ein Werkzeug aufweist, wobei die Werkzeugmaschine mit einer numerischen Steuerung verbunden ist und wobei die Bearbeitung von einem in der Steuerung ablaufenden NC-Programm gesteuert wird, welches die Bearbeitung des Werkstücks in der Werkzeugmaschine durch die Ausführung einer Vielzahl von Bearbeitungsschritte beschreibt.

Die Erfindung betrifft weiterhin eine numerische Steuerung zur Durchführung eines solchen Verfahrens.

Die wesentliche Aufgabe einer numerisch gesteuerten Werkzeugmaschine ist es, Bearbeitungsaufgaben hochpräzise und vollautomatisch zu erledigen. Die Arbeits- und Bewegungsabläufe werden mit Hilfe von sequentiellen Steuerbefehlen programmiert. Die Steuerbefehle werden von der Steuerung interpretiert und in entsprechende Signale für die Maschinenantriebe transformiert. Die Steuerbefehle bestehen aus Maßzahlen, welche die Relativlage zwischen das Werkzeug und das Werkstück kennzeichnen.

Bei der Freiformflächenbearbeitung (z.B. im Werkzeug- und Formenbau) werden NC-Programme (NC steht hierbei für engl. "numerical control") zur Steuerung der jeweiligen Werkzeugmaschine, insbesondere Fräsmaschine, verwendet. Solche NC-Programme (auch Teileprogramm genannt) werden heutzutage hauptsächlich durch CAD/CAM/PP-Systeme generiert. Dabei wird das herzustellende Werkstück zunächst mit einem CAD-Programm (Computer Aided Design) entworfen und anschließend durch ein CAM-Programm (Computer Aided Manufacturing) in einen maschinenunabhängigen Code (beschreibt den Bearbeitungsablauf) übersetzt. Ein Post-Prozessor (PP) übersetzt den maschinenunabhängigen Code in einen maschinenabhängigen Code, das NC-Bearbeitungsprogramm, das zur Ansteuerung der jeweils konkreten Maschine genutzt werden kann.

Beim Herstellen eines Werkstücks kommt es gelegentlich zu Oberflächenfehlern. Diese entstehen in der Regel durch zu tiefes oder zu geringes Eintauchen des Werkzeugs, insbesondere eines Fräsers, ins Material des zu bearbeitenden Werkstücks im Vergleich zu den Nachbarbahnen. Eine solche Fehlstelle kann durch unterschiedliche Gründe verursacht werden, z.B. Programmierfehler, Werkzeugbruch oder eine andere Form der Werkzeugabnutzung, etc.

Im Aerospace-Bereich oder im Mold-Bereich gibt es Formen, bei denen das zu bearbeitende Werkstück über hunderttausend Euro kostet. Ein einziger Oberflächenfehler auf dem Werkstück würde das Werkstück unbrauchbar machen. Im Allgemeinen wird ein fehlerhaftes Werkstück anschließend mit viel Aufwand repariert oder kann schlimmstenfalls gar nicht verwendet werden.

Die Probleme der Oberflächenqualität wurden bislang unter anderem dadurch gelöst, dass Programme höherer Qualität im CAM erzeugt wurden oder die NC-Steuerung eine geringe Glättungs-Toleranz vorgegeben bekommt. Dadurch sind solche Oberflächenfehler weniger sichtbar. Allerdings kommt es so zur Ausbildung scharfer Kanten, die die Maschine abfahren muss, mit dem unerwünschten Effekt von Geschwindigkeitseinbußen.

Eine weitere Möglichkeit, diese Probleme zu lösen, ist die Nachbearbeitung des gefertigten Werkstücks "per Hand". Dabei werden die einzelnen Fräsfehler nach dem Anfertigen des Werkstücks manuell beseitigt, was im Herstellungsprozess Zeit und somit Geld kostet. Eine manuelle Nachbearbeitung erfordert ein hohes Maß nach handwerklichem Geschick und Schulungsaufwand. Bei Produktionen mit günstigen Rohteilen oder hoher Werkstückzahl wird daher ein defektes Teil als Ausschuss aussortiert und weggeworfen.

Der Erfindung liegt die Aufgabe zugrunde, eine schnelle und effiziente Oberflächenreparatur eines Werkstücks zu gewährleisten, welches mit Hilfe einer numerisch gesteuerten Werkzeugmaschine bearbeitet wird.

Die Aufgabe wird erfindungsgemäß gelöst durch ein Verfahren zur Bearbeitung eines Werkstücks in einer numerisch gesteuerten Werkzeugmaschine, die zumindest ein Werkzeug aufweist, wobei die Werkzeugmaschine mit einer numerischen Steuerung verbunden ist und wobei die Bearbeitung von einem in der Steuerung ablaufenden NC-Programm gesteuert wird, welches die Bearbeitung des Werkstücks in der Werkzeugmaschine durch die Ausführung einer Vielzahl von Bearbeitungsschritte beschreibt, mit den Schritten:
- zumindest eine Fehlstelle an der Oberfläche des Werkstücks wird lokalisiert,
- in die Steuerung werden Daten über die Fehlstelle eingespeist,
- die Steuerung identifiziert einen entsprechenden Teil des NC-Programms für die Bearbeitung des Werkstücks, in dem die Bearbeitung der Fehlstelle programmiert ist,
- die Steuerung berechnet eine Fahrbahn des Werkzeugs zur Fehlstelle,
- das Werkzeug wird über diese Fahrbahn zur Fehlstelle verfahren und
- die Fehlstelle wird gemäß dem entsprechenden Teil des NC-Programms nachbearbeitet, wobei wenigstens ein Bearbeitungsschritt geändert wird.

Die Aufgabe wird weiterhin erfindungsgemäß gelöst durch eine numerische Steuerung zur Durchführung eines solchen Verfahrens.

Die im Bezug auf das Verfahren nachstehend angeführten Vorteile und bevorzugten Ausgestaltungen lassen sich sinngemäß auf die numerische Steuerung übertragen.

Die Erfindung basiert auf der Überlegung, dass eine schnelle und effiziente Oberflächenverbesserung eines fehlerhaften Werkstücks durch einen hohen Automatisierungsgrad der Nachbearbeitung erreicht werden kann, indem der bereits vorhandene und angewendete Teil des NC-Programms, in welchem die Bearbeitung des Bereichs der Fehlstelle des Werkstücks hinterlegt ist, von der Steuerung identifiziert wird und im Rahmen des Nachbearbeitungsvorgangs wieder verwendet wird. Die Effizienz wird hierbei dadurch gesteigert, dass nicht das gesamte Werkstück neu bearbeitet wird, sondern nur ein begrenzter, lokaler Bereich. Es ist daher erforderlich, nur einen Teil des NC-Programms heranzuziehen.

Hierzu ist zunächst erforderlich, dass die Fehlstelle an der Oberfläche des Werkstücks visuell, insbesondere durch einen Werkzeugmaschinenbediener, oder automatisch z.B. unter dem Einsatz von Kameras lokalisiert wird. Unter "Fehlstelle" wird hierbei sowohl die Position eines geometrischen Fehlers auf der Oberfläche des Werkstücks als auch seine Größe und/oder Form verstanden. Im Falle einer Bearbeitung des Werkstück mittels eines Fräswerkzeugs kann die Fehlstelle z.B. eine Kerbe sein, die durch ein zu tiefes Einfräsen im Material des Werkstücks entstanden ist, oder alternativ eine Erhöhung an der Oberfläche des Werkstücks, verursacht durch ein zu geringes Eintauchens des Fräswerkzeugs.

Nachdem die Fehlstelle lokalisiert ist, werden der Steuerung die Daten über die Fehlstelle zugespielt, insbesondere ihre Position, Größe und Form. Die Steuerung sucht dabei automatisch den entsprechenden Teil des NC-Programms für die Bearbeitung des Werkstücks, in dem die Bearbeitung des Bereichs der Fehlstelle programmiert ist. Als nächstes analysiert die Steuerung die Fehlstelle und berechnet eine Fahrbahn des Werkzeugs zur Fehlstelle. Das Werkzeug wird schließlich zur Fehlstelle verfahren und diese wird nachbearbeitet, indem der Teil des NC-Programms, der die Schritte für die erstmalige Bearbeitung dieses Bereichs enthält, erneut angewendet wird, jedoch wenigstens einer der erstmaligen Bearbeitungsschritte geändert wird.

Mit Änderung eines Bearbeitungsschritts wird hierbei eine Änderung eines Maschinen- oder Steuerungsparameters, des NC-Programms oder des Werkzeugs bezeichnet. Die Änderung kann z.B. darin bestehen, dass das Fräswerkzeug gegen ein neues Fräswerkzeug ausgetauscht wird. Die Änderung des Bearbeitungsschritts kann jedoch auch mehrere Vorgänge umfassen, z.B. einen Tausch des Fräswerkzeugs gegen ein Schweißwerkzeug, eine Auftragung von Material an der Fehlstelle z.B. durch Auftragsschweißen, ein erneuter Einsatz des Fräswerkzeugs und ein Abtragen des überschüssigen, aufgeschweißten Materials unter Anwendung des identifizierten Teils des NC-Programms.

Gemäß einer bevorzugten Ausführungsform wird vor der Nachbearbeitung im Bereich der Fehlstelle über ein additives Verfahren neues Material auf das Werkstück aufgebracht. Durch die Anwendung von "Additive Manufacturing" Verfahren bei der automatisierten Reparatur der Werkstücke wird eine hohe Qualität der Nachbearbeitung gewährleistet.

Die Nutzung des vorhandenen NC-Programms wird dadurch begünstigt, dass das Werkstück bevorzugt während der Nachbearbeitung in seiner ursprünglichen Position der erstmaligen Bearbeitung beibehalten wird. Dies bedeutet, dass das Werkstück sowohl bei der erstmaligen Bearbeitung als auch bei der Nachbearbeitung der Fehlstelle in der Werkzeugmaschine eingespannt wird und nicht mehr bewegt wird.

Vorzugsweise beinhaltet die Bearbeitung des Werkstücks eine Herstellung des Werkstücks und die Fehlstelle wird nach der Fertigstellung des Werkstücks lokalisiert. Hierbei ist die erstmalige Bearbeitung, bei der die Fehlstelle entsteht, die Herstellung des Werkstücks. Somit wird gewährleistet, dass zu einem möglichst frühen Zeitpunkt die Fehlstelle detektiert und behoben wird, wodurch der Bearbeitungsauswand zu einem späteren Zeitpunkt, z.B. wenn das Werkstück von der Herstellungswerkzeugmaschine entfernt wird, minimiert ist.

Zweckdienlicherweise wird die Fehlstelle visuell von einem Bediener der Werkzeugmaschine lokalisiert. Hierbei entfällt der Einsatz von zum Teil teuren Sensoren zur Lokalisierung der Fehlstelle. Bei dieser Ausführung werden die Daten über die Fehlstelle vorteilhafterweise in die Steuerung eingespeist, indem der Bediener die Fehlstelle anhand einer Werkstücksimulation markiert. In der Regel wird vor der Herstellung eines Werkstücks dieses mit Hilfe des NC-Programms simuliert. Die 3D-Simulation ermöglicht dem Werkzeugmaschinenbediener, auf einfache Art und Weise zu überprüfen, ob es bei der Programmierung eventuell zu Fehlern gekommen ist. Wenn der Werkzeugmaschinenbediener die Fehlstelle erkennt, markiert er den Bereich der Fehlstelle auf der 3D-Simulation des Werkstücks. Dank dieser Markierung erkennt die Steuerung automatisch den Teil des NC-Programms, in denen die Bearbeitung für diesen Bereich der Werkstückoberfläche hinterlegt ist.

Im Hinblick auf einen besonders hohen Automatisierungsgrad des Verfahrens zur Reparatur der Fehlstelle wird die Fehlstelle vorteilhafterweise automatisch von der Steuerung unter Verwendung von Bilddaten des Werkstücks lokalisiert. Hierbei erfolgt sowohl das Lokalisieren der Fehlstelle als auch die Eingabe der Daten über die Fehlstelle an die Steuerung völlig automatisch, ohne den Einsatz eines Werkzeugmaschinenbedieners. Insbesondere kann zur Auswertung der Oberfläche ein Interferenzmuster auf die Oberfläche projiziert werden, welches automatisiert, z.B. über eine Kamera mit einer zugehörigen Software, im Hinblick auf Musterabweichungen ausgewertet wird, um mögliche Fehlstellen an der Werkstückoberfläche zu identifizieren. Wird eine solche Fehlstelle identifiziert, sendet die Auswertungssoftware die Daten über die Fehlstelle an die Steuerung, die wiederum den entsprechenden Teil im NC-Programm identifiziert und Möglichkeiten zur Anpassung von Bearbeitungsschritten beim wiederholten Ausführen dieses Teils des NC-Programms sucht.

Vorzugsweise wird als Änderung eines Bearbeitungsschritts ein anderes Werkzeug eingesetzt. Es kann sich hierbei um einen Austausch gegen ein neues, gleichartiges, nicht-abgenutztes Werkzeug handeln. Alternativ wird ein anderes Werkzeug mit einer anderen Funktion (z.B. ein Schweißwerkzeug, dann wieder ein Fräswerkzeug) eingesetzt.

Alternativ oder ergänzend wird als Änderung eines Bearbeitungsschritts vorteilhafterweise ein Maschinen- oder Steuerungsparameter geändert. Beispielsweise wird der Vorschub bzw. die Geschwindigkeit des Werkzeugs bei der Nachbearbeitung im Bereich der Fehlstelle verringert. Unter Maschinen- oder Steuerungsparameter wird hierbei jeder Parameter verstanden, welcher sich auf die Arbeitsweise der Werkzeugmaschine, einschließlich des Werkzeugs, bezieht und/oder von der Steuerung vorgegeben wird.

Gemäß einer dritten Möglichkeit ist vorgesehen, dass als Änderung eines Bearbeitungsschritts bevorzugt eine Anpassung des entsprechenden Teils des NC-Programms durchgeführt wird, wodurch sicher gestellt wird, dass der gleiche Fehler bei der Bearbeitung weiterer Werkstücke nicht erneut auftritt.

Ein Ausführungsbeispiel der Erfindung wird anhand einer Zeichnung näher erläutert. Hierin zeigen schematisch und stark vereinfacht:
- FIG 1: eine Steuerung einer Werkzeugmaschine, und
- FIG 2: den Ablauf eines erfindungsgemäßen Verfahrens nach Art eines Flussdiagramms.

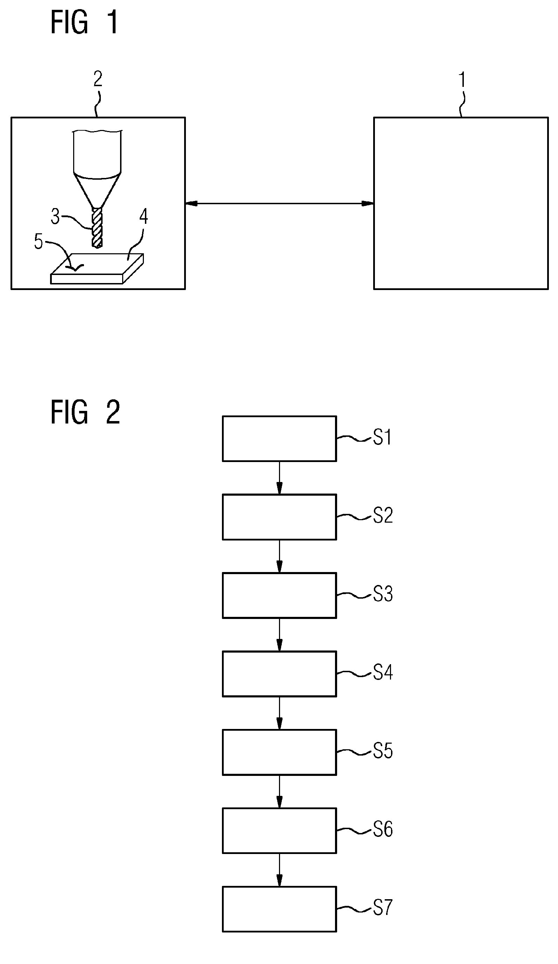

In FIG 1 wird eine industrielle Steuerungsumgebung mit einer Steuerung 1 zur Steuerung oder Regelung einer Werkzeugmaschine 2, die mittels eines Werkzeugs 3 ein Werkstück 4 bearbeitet, gezeigt. Die Steuerung 1 steuert insbesondere die Relativbewegung zwischen dem Werkzeug 3 und dem Werkstück 4 in Echtzeit.

Die gezeigte Steuerung 1 führt üblicher Weise eine Steuerfunktion durch Abarbeitung eines Steuerprogramms (NC-Programms) in Echtzeit aus und steuert dadurch die Relativbewegung zwischen dem Werkzeug 3 und dem Werkstück 4. Hierbei werden von der Steuerung 1 Eingangsdaten bzw. Eingangssignale ("Istwerte") der Werkzeugmaschine 2 erfasst und die Steuerung 1 erzeugt unter Einbeziehung dieser Istwerte Ausgangssignale in Form von Steuerbefehlen für die Werkzeugmaschine 2 und insbesondere deren Antriebe. Dabei können die Istwerte auch Maschinenzustände sowie Sensorsignale umfassen.

Ein beispielhafter Ablauf bei der Formgebung des Werkstücks 4 ist in FIG 2 dargestellt. Nachdem eine erstmalige Bearbeitung des Werkstücks 4, insbesondere eine Herstellung des Werkstücks 4 mittels der Werkzeugmaschine 2 abgeschlossen ist, wird die Oberfläche des Werkstücks 4 untersucht. Dies kann visuell durch einen Bediener der Werkzeugmaschine 2 erfolgen, oder mittels zumindest einer nicht hier gezeigten Kamera, die auf das Werkstück 4 gerichtet ist und Bilddaten des Werkstücks 4 an die Steuerung 1 oder an eine separate Auswerteeinheit weiterleitet.

Wenn in einem ersten Schritt S1 zumindest eine Fehlstelle 5 an der Oberfläche des Werkstücks 4 lokalisiert wird, werden im zweiten Schritt S2 in die Steuerung 1 Daten über die Fehlstelle 5 eingespeist. Dies können die Bilddaten der Kamera sein, oder im Falle einer visuellen Lokalisierung der Fehlstelle 5 kann der Bediener z.B. den Bereich der Fehlstelle 5 auf einer vorgefertigten Werkstücksimulation eingrenzen.

Nachdem der Steuerung 1 die Informationen über die Fehlstelle 5 zugeführt sind, identifiziert diese im Schritt S3 automatisch einen entsprechenden Teil des NC-Programms für die Bearbeitung des Werkstücks 4, in dem die Bearbeitung der Fehlstelle 5 programmiert ist.

Anschließend berechnet die Steuerung 1 im Schritt S4 eine Fahrbahn des Werkzeugs 3 zur Fehlstelle 5. Darüber hinaus analysiert die Steuerung 1 die Fehlstelle 5 und schlägt im Schritt S5 eine Möglichkeit vor, wie die Fehlstelle 5 repariert wird, indem zumindest ein Bearbeitungsschritt geändert wird.

Gemäß dem geänderten Bearbeitungsschritt kann z.B. vorgesehen sein, dass ein anderes Werkzeug 3 eingesetzt wird, dass ein Maschinen- oder Steuerungsparameter angepasst wird, oder dass der Teil des NC-Programms, in dem die Bearbeitung des Bereichs der Fehlstelle 5 programmiert ist, angepasst wird. Bei mehreren Möglichkeiten zeigt die Steuerung 1 diese dem Bediener an, der dann entscheidet, welche Änderungen vorgenommen werden. Alternativ, insbesondere wenn nur eine Möglichkeit zur Änderung eines Bearbeitungsschritts in Frage kommt, kann die Steuerung 1 diese völlig automatisch durchführen.

Die Reihenfolge der Schritte S3, S4 und S5 ist nicht zwingend, insbesondere können Schritte S4 und S5 parallel ablaufen, oder die Steuerung 1 analysiert zuerst die Fehlstelle 5 und berechnet anschließend die Fahrbahn für das Werkzeug 3 bis zur Fehlstelle 5.

In einem weiteren Schritt S6 wird das Werkzeug 3 über die im Schritt S4 berechnete Fahrbahn zur Fehlstelle 5 verfahren und im letzten Schritt S7 wird die Fehlstelle 5 gemäß dem entsprechenden Teil des NC-Programms nachbearbeitet.

Der wesentliche Vorteil des oben beschriebenen Verfahrens liegt darin, dass nicht das gesamte Werkstück 4 neu bearbeitet wird, sondern nur ein begrenzter, lokaler Bereich der Fehlstelle 5. Es ist daher für die Reparatur der Fehlstelle nur ein Teil des NC-Programms erforderlich, wodurch sowohl die Effizienz als auch der Automatisierungsgrad der Nachbearbeitung besonders hoch sind.

## Patentansprüche

1. Verfahren zur Bearbeitung eines Werkstücks (4) in einer numerisch gesteuerten Werkzeugmaschine (2), die zumindest ein Werkzeug (3) aufweist, wobei die Werkzeugmaschine (2) mit einer numerischen Steuerung (1) verbunden ist und wobei die Bearbeitung von einem in der Steuerung (1) ablaufenden NC-Programm gesteuert wird, welches die Bearbeitung des Werkstücks (4) in der Werkzeugmaschine (2) durch die Ausführung einer Vielzahl von Bearbeitungsschritte (S1-S7) beschreibt, mit den Schritten:
- zumindest eine Fehlstelle (5) an der Oberfläche des Werkstücks (4) wird lokalisiert,
- in die Steuerung (1) werden Daten über die Fehlstelle (5) eingespeist,
- die Steuerung (1) identifiziert einen entsprechenden Teil des NC-Programms für die Bearbeitung des Werkstücks (4), in dem die Bearbeitung der Fehlstelle (5) programmiert ist,
- die Steuerung (1) berechnet eine Fahrbahn der Werkzeugmaschine (2) zur Fehlstelle (5),
- das Werkzeug (3) wird über diese Fahrbahn zur Fehlstelle (5) verfahren und
- die Fehlstelle (5) wird gemäß dem entsprechenden Teil des NC-Programms nachbearbeitet, wobei wenigstens ein Bearbeitungsschritt (S1-S7) geändert wird.

2. Verfahren nach Anspruch 1,
wobei vor der Nachbearbeitung im Bereich der Fehlstelle (5) über ein additives Verfahren neues Material auf das Werkstück (4) aufgebracht wird.

3. Verfahren nach Anspruch 1 oder 2,
wobei das Werkstück (4) während der Nachbearbeitung in seiner ursprünglichen Position der erstmaligen Bearbeitung beibehalten wird.

4. Verfahren nach einem der vorhergehenden Ansprüche,
wobei die Bearbeitung des Werkstücks (4) eine Herstellung des Werkstücks (4) beinhaltet und die Fehlstelle (5) nach der Fertigstellung des Werkstücks (4) lokalisiert wird.

5. Verfahren nach einem der vorhergehenden Ansprüche,
wobei die Fehlstelle (5) visuell von einem Bediener der Werkzeugmaschine (2) lokalisiert wird.

6. Verfahren nach Anspruch 5,
wobei die Daten über die Fehlstelle (5) in die Steuerung (1) eingespeist werden, indem der Bediener die Fehlstelle (5) anhand einer Werkstücksimulation markiert.

7. Verfahren nach einem der Ansprüche 1 bis 4,
wobei die Fehlstelle (5) automatisch von der Steuerung (1) unter Verwendung von Bilddaten des Werkstücks (4) lokalisiert wird.

8. Verfahren nach einem der vorhergehenden Ansprüche,
wobei als Änderung eines Bearbeitungsschritts (S1-S7) ein anderes Werkzeug (3) eingesetzt wird.

9. Verfahren nach einem der vorhergehenden Ansprüche,
wobei als Änderung eines Bearbeitungsschritts (S1-S7) ein Maschinen- oder Steuerungsparameter angepasst wird.

10. Verfahren nach einem der vorhergehenden Ansprüche,
wobei als Änderung eines Bearbeitungsschritts (S1-S7) eine Anpassung des entsprechenden Teils des NC-Programms durchgeführt wird.

11. Numerische Steuerung (1) zur Durchführung eines Verfahrens nach einem der Ansprüche 1 bis 10.
